# EUROPEAN PATENT APPLICATION

(11) **EP 4 654 023 A1**
(43) Date of publication of application: **26.11.2025**
(21) Application number: 24177259.9
(22) Date of filing: 22.05.2024
(51) Int. Cl.: G06F 11/36

(54) **AUTONOMOUS DRIVING VERIFICATION SYSTEM THROUGH REAL-VIRTUAL INFORMATION CONVERGENCE**

(71) Applicant: KIAPI (Korea Intelligent Automotive Parts Promotion Institute), Dalseong-gun, Daegu 43011 (KR)
(72) Inventor: Yun, Hyeong Seok, Daegu 43018 (KR); Han, Jong Ho, Daegu 43008 (KR); Kim, Bong Seob, Daegu 41584 (KR); Yun, Kyung Su, Daegu 43016 (KR)
(74) Representative: Gulde & Partner

(57) **Abstract**

The present invention provides an autonomous driving verification system through real-virtual information convergence, including: a vehicle driving unit that is composed of a plurality of devices that perform steering, driving, deceleration, and braking functions; a simulation unit that generates virtual information including a real city road environment; and an autonomous driving unit that verifies autonomous driving by constructing a virtual environment in which real surrounding environment information acquired from a sensor and virtual information of the simulation unit are converged, and controls the vehicle driving unit to be actually driven within the virtual environment to verify autonomous driving, in which the virtual information of the simulation unit may include signal display information received from infrastructure including at least one of a signal controller, an unexpected situation detector, a pedestrian detector, and CCTV within an intersection installed on a city street.

## Description

### BACKGROUND

### 1. FIELD

The present invention relates to an autonomous driving verification system through real-virtual information convergence that can design and test an environment very similar to a real environment as a virtual environment to verify performance of autonomous driving based on real vehicles for unexpected scenarios that are difficult to test in reality, and perform reliable autonomous driving verification based on real vehicles for unexpected scenarios that are difficult to test in reality.

### 2. DESCRIPTION OF RELATED ART

An autonomous driving vehicle is a vehicle that travels to a destination on its own without a driver having to operate a steering wheel, an accelerator pedal, a brake, etc. Recently, as autonomous driving technology has been recognized as a core technology for smart cars, major automobile manufacturers as well as software companies are actively developing autonomous driving technology.

Numerous types of technologies are needed to implement the autonomous driving. For example, a highway driving assistance system (HDA), a lane departure warning system (LDWS), a lane keeping assist system (LKAS), a rear blind spot warning system (BSD), an advanced smart cruise control (ASCC), an automatic emergency braking system (AEB), etc., which automatically maintain an inter-vehicle distance, are required.

For completion of the autonomous driving vehicles, since all of these various technologies should be above a certain level, it takes a long time and requires a lot of trial and error.

Therefore, along with the development technology for autonomous driving vehicles, test methods are also being developed to check driving performance of autonomous driving vehicles and whether there are any malfunctions in the functions of various systems.

However, testing of conventional autonomous driving vehicles is not easy because there is a high possibility of causing an accident when testing on real roads. Therefore, a system for testing autonomous driving vehicles that can provide an environment similar to real road conditions without being a real road has been proposed.

However, in the case of such a conventional autonomous driving test system, it is difficult to implement a specific area that matches the conditions of the real road environment (e.g., roads, signal systems, vehicles, pedestrians, various structures, weather, lighting, etc.), and it was not possible to implement a test environment in which various corner cases and dilemma situations in an urban driving environment with many unexpected situations and on-road infrastructure such as control systems and roadside devices are combined.

In other words, testing of the conventional autonomous vehicles should be done for various situations that may actually occur. However, it is difficult on real roads due to problems such as causing accidents, and the simulated environment also has limitations in implementing real environments and situations. There are limitations in verifying the performance of the autonomous driving vehicles.

### [Related Art Document]

### [Patent Document]

KR 10-1938064 B1(2019.001.07)

### SUMMARY

The present invention provides an autonomous driving verification system through real-virtual information convergence capable of implementing various realistic situations by converging reality and virtual space to simulate real roads and situations.

The present invention may include the following embodiments in order to achieve the above object.

According to an embodiment of the present invention, an autonomous driving verification system through real-virtual information convergence includes: a vehicle driving unit that is composed of a plurality of devices that perform steering, driving, deceleration, and braking functions; a simulation unit that generates virtual information including a real city road environment; and an autonomous driving unit that verifies autonomous driving by constructing a virtual environment in which real surrounding environment information obtained from a sensor and virtual information of the simulation unit are converged, and controls the vehicle driving unit to be actually driven within the virtual environment to verify autonomous driving, in which the virtual information of the simulation unit may include signal display information received from infrastructure including at least one of a signal controller, an unexpected situation detector, a pedestrian detector, and CCTV within an intersection installed on a city street.

The autonomous driving unit may include: a sensor information acquisition module that is provided with a plurality of sensors to acquire information around an autonomous driving vehicle; a vehicle information acquisition module that outputs vehicle state information including at least one of a driving speed and its change amount, a battery charge amount, a device operation state, a steering state, a brake operation or not, and a lighting state; a driving determination module that controls a vehicle driving unit according to real information output from the vehicle information acquisition module and the sensor information acquisition module and a value set in virtual information of the simulation unit; and a virtual environment construction module that implements a virtual environment in which the virtual information including the specific city road environment and signal display information from the simulation unit and a real road are converged.

The simulation unit may set a setting value including a route and speed for driving the autonomous driving vehicle, a control value for steering, driving, and braking, and a scenario for avoiding an unexpected situation, and output the set setting value, control value, and scenario to the autonomous driving unit.

The autonomous driving unit may further include a driving determination module that transmits the control value necessary for the autonomous driving to the vehicle driving unit based on the setting value received from the simulation unit to control the vehicle driving unit according to the set scenario when the unexpected situation is detected within the virtual environment.

### BRIEF DESCRIPTION OF DRAWINGS

FIG. 1 is a diagram illustrating an outline of the present invention.
FIG. 2 is a block diagram illustrating an autonomous driving verification system through real-virtual information convergence according to the present invention.
FIG. 3 is a block diagram illustrating an autonomous driving unit.
FIG. 4 is a block diagram illustrating a simulation unit.
FIG. 5 is a block diagram illustrating a V2X communication unit.
FIG. 6 is a flowchart illustrating an autonomous driving verification method through real-virtual information convergence according to the present invention.
FIG. 7 is a diagram illustrating a movement route of a real autonomous driving vehicle as an embodiment of the present invention.
FIG. 8 is a diagram illustrating a virtual environment implemented in the autonomous driving vehicle of FIG. 7.

### DETAILED DESCRIPTION

The present invention may be variously modified and have several exemplary embodiments. Therefore, specific exemplary embodiments of the present invention will be illustrated in the accompanying drawings and be described in detail. This is not intended to limit the present invention to specific embodiments, and it should be understood that this corresponds to any one of all modifications, equivalents or substitutes included in the spirit and scope of the present invention for connecting and/or fixing structures extending in different directions.

Terms used in the present specification are used only in order to describe specific exemplary embodiments rather than limiting the present invention. Singular forms are intended to include plural forms unless the context clearly indicates otherwise.

It should be further understood that terms "include" or "have" used in the present specification specify the presence of features, numerals, steps, operations, components, parts mentioned in the present specification, or combinations thereof, but do not preclude the presence or addition of one or more other features, numerals, steps, operations, components, parts, or combinations thereof.

Hereinafter, a preferred embodiment of an autonomous driving verification system through real-virtual information convergence according to the present invention will be described with reference to the drawings.

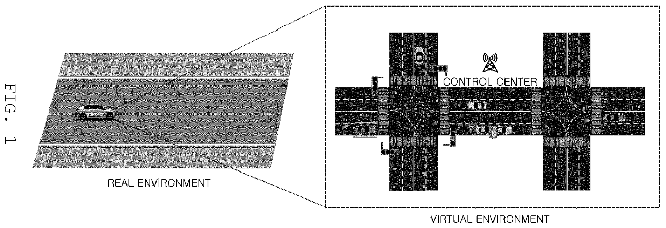

FIG. 1 is a diagram illustrating an outline of the present invention.

Referring to FIG. 1, in the present invention, an autonomous driving vehicle driving on a road or test road receives virtual information from, for example, an external control center through a V2X communication device and converges real information detected by a sensor function of the autonomous driving vehicle with the virtual information, thereby implementing a virtual road environment.

In this case, the received virtual information is virtual information linked to precise infrastructure of a specific area that meets conditions of the domestic road environment (road signal system, vehicles, pedestrians, various structures, lighting, and weather, etc.).

Here, the infrastructure may include signal controllers, unexpected situation detectors, pedestrian detectors, CCTV, etc., within intersections.

In addition, similar to the city road environment, the virtual environment may be configured to suit the necessary scenario by adjusting the surrounding environment, such as intersections and shaded areas due to buildings.

In addition, the present invention may configure various objects (vehicles, pedestrians, etc.) and traffic environments (smoothness, delay and congestion, presence of traffic accidents ahead) around the autonomous driving vehicle, and in the case of traffic, is linked to infrastructure systems in a specific area to implement real signal display information.

In addition, the present invention may accurately simulate autonomous driving software by simulating a vehicle model similar to the real vehicle environment and receiving information from the real vehicle in order to conduct real vehicle-based testing.

For example, as illustrated in FIG. 1, the real autonomous driving vehicle is in an environment without obstacles as illustrated on the left, and the virtual environment implements a city road environment as illustrated on the right.

In other words, the autonomous driving vehicle verification system according to the present invention may construct a virtual environment as illustrated in the drawing by linking with the infrastructure information of the real city road.

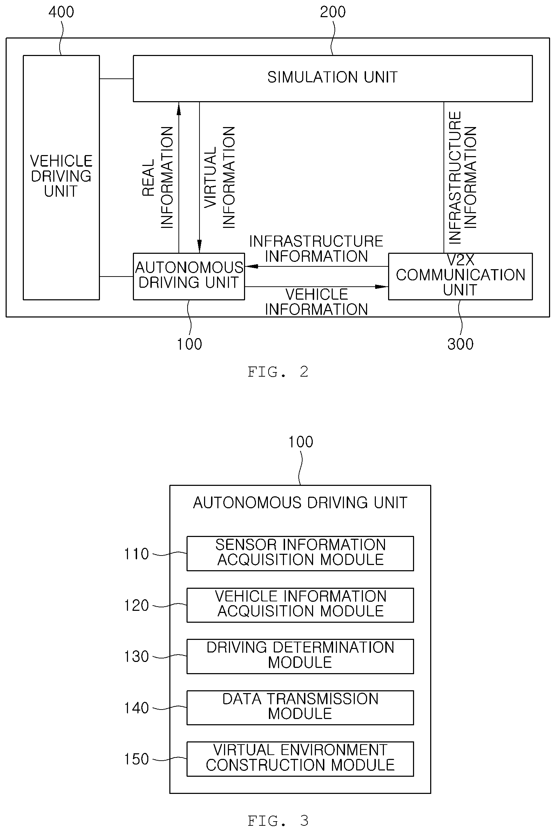

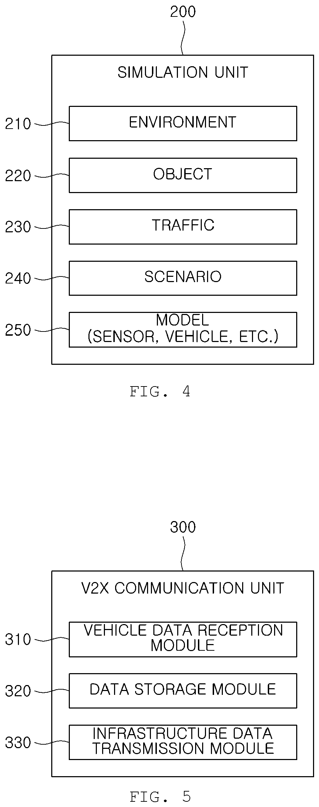

FIG. 2 is a block diagram illustrating an autonomous driving verification system through real-virtual information convergence according to the present invention, FIG. 3 is a block diagram illustrating an autonomous driving unit, FIG. 4 is a block diagram illustrating a simulation unit, and FIG. 5 is a block diagram illustrating a V2X communication unit.

Referring to FIGS. 2 to 5, the present invention may include an autonomous driving unit 100, a simulation unit 200, a V2X communication unit 300, and a vehicle driving unit 400.

The autonomous driving unit 100 controls the autonomous driving vehicle by converging real information, including information on the real road and road surroundings, with virtual information to construct a virtual environment that may verify the autonomous driving vehicle.

The simulation unit 200 simulates a real city road environment in a specific area and generates virtual information including signal display information linked from the infrastructure of the corresponding area.

The V2X communication unit 300 receives infrastructure information, outputs the received infrastructure to the simulation unit 200 and the autonomous driving unit 100, and receives and stores data acquired during the real driving of the autonomous driving vehicle. The data acquired during the autonomous driving may be used as reference data for verification during the autonomous driving.

Among them, the autonomous driving unit 100 includes a sensor information acquisition module 110, a vehicle information acquisition module 120, a driving determination module 130, a data transmission module 140, and a virtual environment construction module 150.

The sensor information acquisition module 110 collects information from sensors such as a camera, lidar, radar, GPS/IMU, and ultrasonic waves.

The vehicle information acquisition module 120 collects driving-related information. For example, the vehicle information acquisition module 120 collects state information before and during driving of the autonomous driving vehicle, such as speed and its change amount, a battery charge amount, a device operation state, a steering state, a brake operation or not, and a lighting state.

The driving determination module 130 controls the vehicle driving unit 400. For example, the driving determination module 130 determines elements (speed, steering value, etc.) necessary for autonomous driving based on the setting values (route, maximum speed, etc.) received from the simulation unit 200, and transmits control values according to the determination to the vehicle driving unit 400.

In addition, the driving determination module 130 may include information collected by the sensor information acquisition module 110 in the determination elements (e.g., a case where an object actually exists ahead or there is no road on which you are driving).

That is, the driving determination module 130 controls a vehicle driving unit 400 according to values set within real information and virtual information.

The data transmission module 140 transmits the collected information to the infrastructure (e.g., control center and/or roadside device) through the V2X communication unit 300.

The virtual environment construction module 150 constructs the virtual environment in which the real road and the virtual information are converged. In this case, signal control of, for example, vehicles, pedestrians, traffic lights, pedestrian detectors, and unexpected detectors within the constructed virtual environment reflects the received infrastructure information.

That is, the virtual environment construction module 150 builds the virtual environment in which the real information acquired from the sensor information acquisition module 110 and the virtual information from the simulation unit 200 are converged.

The simulation unit 200 virtually implements an environment 210, an object 220, traffic 230, a scenario 240, and a model (sensors, vehicles, traffic lights, pedestrians) 250. The above environment 210, objects 220, traffic 230, scenarios 240, models 250, etc., may be linked to the infrastructure of a specific area.

For example, the simulation unit 200 generates virtual information including a city road in area A according to information received from infrastructure of the area A received from the V2X communication unit 300. In this case, the virtual information may include the signal display information linked to the infrastructure (signal controllers, unexpected situation detectors, pedestrian detectors, and CCTV within the intersections) of the area A. In other words, the simulation unit 200 may implement objects, environment, traffic, scenarios, and models in the city road environment of the area A according to the roads and surrounding conditions of the city road from the infrastructure of the area A.

The V2X communication unit 300 includes a vehicle data reception module 310 that receives vehicle data, a data storage module 320 that stores collected data, and an infrastructure data transmission module 330 that transmits and receives infrastructure information.

The vehicle data reception module 310 receives the vehicle and surrounding information (real information) received from the sensor information acquisition module 110 and the vehicle driving unit 400. Such real information may be stored in the data storage module 320.

The infrastructure data transmission module 330 receives information linked from the infrastructure and outputs the received information to the simulation unit 200. In addition, the infrastructure data transmission module 330 may receive data in real time through the linked infrastructure, store the received data in the data storage module 320, and transmit the selected data according to the request of the simulation unit 200.

Here, the infrastructure data transmission module may receive the signal display information in real time from the infrastructure of the linked specific area, and outputs the received signal display information to the simulation unit in real time. Therefore, the simulation unit may implement the signal display in the virtual environment in real time according to the real city road environment.

In other words, according to the present invention, it is possible to implement the city road environment of the specific area in real time.

The present invention includes the above-described configuration, and hereinafter, an autonomous driving verification method through real-virtual information convergence achieved through the above-described configuration will be described.

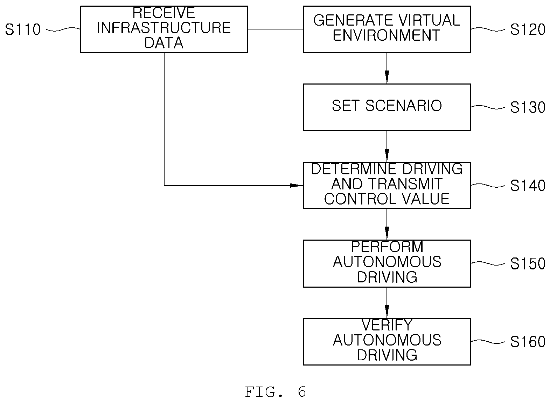

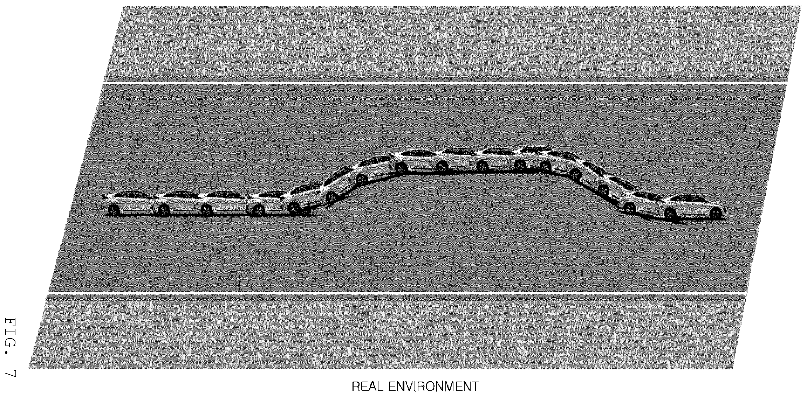

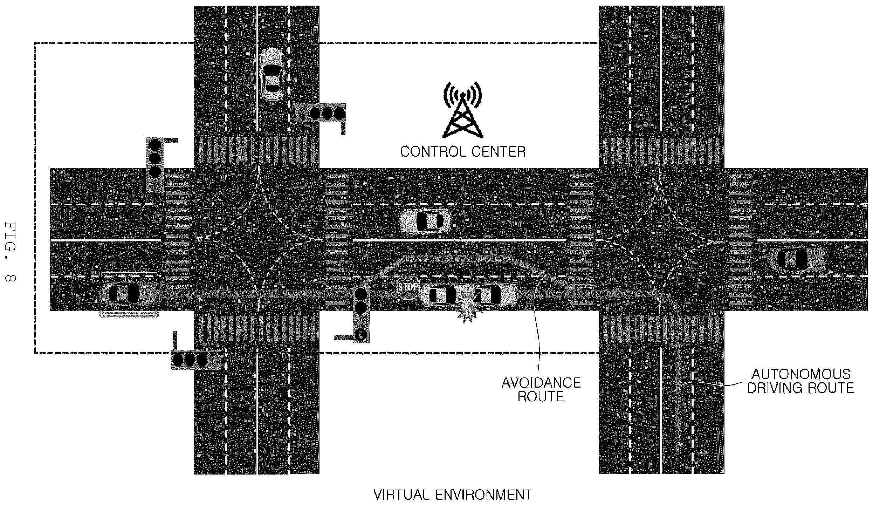

FIG. 6 is a flowchart illustrating an autonomous driving verification method through real-virtual information convergence according to the present invention, FIG. 7 is a diagram illustrating a movement route of a real autonomous driving vehicle as an embodiment of the present invention, and FIG. 8 is a diagram illustrating a virtual environment implemented in the autonomous driving vehicle of FIG. 7.

Referring to FIGS. 6 to 8, the present invention includes step S110 of receiving infrastructure data, step S120 of generating a virtual environment, step S130 of setting a scenario, step S140 of transmitting a driving determination and control value, step S150 of performing autonomous driving, and step S160 of verifying autonomous driving.

Step S110 is a step of receiving the infrastructure data from the verification system. The V2X communication unit 300 receives data from the linked infrastructure and outputs the received data to the simulation unit 200.

Step S120 is the step of generating the virtual environment in the autonomous driving verification system. The simulation unit 200 generates and/or sets main objects of the virtual environment, such as objects, models, and scenarios included in the received data of the infrastructure, and outputs the generated and/or set main objects to the autonomous driving unit 100.

In this case, the infrastructure data is data received from the infrastructure linked to the specific area, such as traffic lights, pedestrian detectors, and unexpected detectors.

Therefore, the autonomous driving unit 100 implements the virtual environment including the plurality of objects included in the downtown environment of the specific area implemented by the simulation unit 200.

Step S130 is the scenario setting step. The simulation unit 200 sets autonomous driving scenarios according to unexpected situations or urban situations in the virtual environment. For example, the simulation unit 200 sets a detection and avoidance scenario of a vehicle collision accident ahead after the autonomous driving vehicle passes the intersections in the virtual environment of FIG. 8 and outputs the set detection and avoidance scenario to the autonomous driving unit 100. The autonomous driving unit 100 registers the scenario of the simulation unit 200.

Step S140 is the step of transmitting the driving determination and control values from the autonomous driving verification system. The autonomous driving unit 100 sets driving determination criteria and control values. The control values may include steering values (steering range, steering order), driving speed, whether to use turn signal lights, etc., and the driving determination criteria may include any one of a detection distance range, traffic lights, driving speed, and presence or absence of objects in a front lane and a next lane.

Step S150 is the autonomous driving step. After executing the virtual environment, the autonomous driving unit 100 controls the vehicle driving unit 400 to drive the real autonomous driving vehicle.

Step S160 is the step to verify autonomous driving. Here, when the signal at the intersection is converted to a drivable signal according to the set scenario, if an object in front is detected after going straight, the autonomous driving unit 100 controls the vehicle driving unit 400 according to a scenario of checking the presence or absence of other objects in the next lane, moving to the next lane, overtaking the object in front, and then returning to the original lane.

In this case, the real autonomous driving vehicle operates according to a scenario that copes with unexpected situations in the virtual environment, such as moving to the next lane after going straight, and returning back to the original lane direction, as illustrated in FIG. 7, under the control of the vehicle driving unit 400 as described above.

Here, the V2X communication unit 300 may receive and store sensor information and state information of the vehicle driving unit 400 and/or transmit the data acquired during the verification to the set external terminal or store the acquired data in the data storage.

In other words, the present invention virtually implements situations that are difficult to implement on real roads, such as unexpected situations for verification of free-driving vehicles, and the autonomous driving vehicle may safely perform difficult verification on real roads by actually maneuvering to avoid the virtually implemented unexpected situations.

In addition, according to the present invention, it is possible to precisely implement the simulation and situation of the specific area by linking with the infrastructure of the specific area.

Accordingly, according to the present invention, it is possible to implement various test environments by combining the real and virtual information and to increase the safety and performance reliability of the autonomous driving vehicle by verifying the performance of the autonomous driving vehicle.

Although the present invention has been described above with limited embodiments and drawings, the present invention is not limited thereto, and of course, various modifications and variations can be made by those skilled in the art to which the present invention pertains.

Those skilled in the art related to this embodiment will be able to understand that the embodiment may be implemented in a modified form without departing from the essential characteristics of the above description. Therefore, the embodiments disclosed herein should be considered in an illustrative aspect rather than a restrictive aspect. The scope of the present invention should be defined by the claims rather than the above-mentioned description, and equivalents to the claims should be interpreted to fall within the present invention.

## Claims

1. An autonomous driving verification system through real-virtual information convergence, comprising:
a vehicle driving unit that is composed of a plurality of devices that perform steering, driving, deceleration, and braking functions;
a simulation unit that generates virtual information including a real city road environment; and
an autonomous driving unit that verifies autonomous driving by constructing a virtual environment in which real surrounding environment information obtained from a sensor and virtual information of the simulation unit are converged, and controls the vehicle driving unit to be actually driven within the virtual environment to verify autonomous driving,
wherein the virtual information of the simulation unit includes signal display information received from infrastructure including at least one of a signal controller, an unexpected situation detector, a pedestrian detector, and CCTV within an intersection installed on a city street.

2. The autonomous driving verification system of claim 1, wherein the autonomous driving unit includes:
a sensor information acquisition module that is provided with a plurality of sensors to acquire information around an autonomous driving vehicle;
a vehicle information acquisition module that outputs vehicle state information including at least one of a driving speed and its change amount, a battery charge amount, a device operation state, a steering state, a brake operation or not, and a lighting state;
a driving determination module that controls the vehicle driving unit according to real information output from the vehicle information acquisition module and the sensor information acquisition module and a value set in virtual information of the simulation unit; and
a virtual environment construction module that implements a virtual environment in which the virtual information including a specific city road environment and signal display information from the simulation unit and a real road are converged.

3. The autonomous driving verification system of claim 2, wherein the simulation unit sets a setting value including a route and speed for driving the autonomous driving vehicle, a control value for steering, driving, and braking, and a scenario for avoiding an unexpected situation, and outputs the set setting value, control value, and scenario to the autonomous driving unit.

4. The autonomous driving verification system of claim 3, wherein the autonomous driving unit further includes a driving determination module that transmits the control value necessary for the autonomous driving to the vehicle driving unit based on the setting value received from the simulation unit to control the vehicle driving unit according to the set scenario when the unexpected situation is detected within the virtual environment.
